# FASCICULE DE BREVET EUROPEEN

(11) **EP 4 247 818 B1**
(45) Date de publication et mention de la délivrance du brevet: **28.01.2026**
(21) Numéro de dépôt: 21823630.5
(22) Date de dépôt: 08.11.2021
(51) Int. Cl.: C07F 3/02, C07F 17/00, C08F 136/06, C08F 236/10, C08F 279/02, C08F 295/00, C08F 297/06, C08F 297/08, C08F 8/42

(54) **DIORGANOMAGNÉSIEN AYANT UNE CHAÎNE DIÉNIQUE OU OLÉFINIQUE ET FONCTIONNELLE AMINE**
DIORGANOMAGNESIUM HAVING A DIENE OR OLEFINIC CHAIN AND AMINE FUNCTION
DIORGANOMAGNESIUM HAVING A DIENE OR OLEFINIC CHAIN AND AMINE FUNCTION

(30) Priorité: 19.11.2020 FR 2011886
(43) Date de publication de la demande: 27.09.2023
(73) Titulaire: Compagnie Générale des Etablissements Michelin, 63000 Clermont-Ferrand (FR); Centre National de la Recherche Scientifique, 75794 Paris Cedex 16 (FR); Ecole Supérieure de Chimie Physique Electronique de Lyon, 69616 Villeurbanne Cedex (FR); Université Claude Bernard Lyon 1, 69622 Villeurbanne Cedex (FR)
(72) Inventeur: BAULU, Nicolas, 63040 CLERMONT-FERRAND Cedex 9 (FR); BOISSON, Christophe, 01390 TRAMOYES (FR); D'AGOSTO, Franck, 69740 GENAS (FR); JEAN-BAPTISTE-DIT-DOMINIQUE, François, 63040 CLERMONT-FERRAND Cedex 9 (FR); NGO, Robert, 63040 CLERMONT-FERRAND Cedex 9 (FR); THUILLIEZ, Julien, 63040 CLERMONT-FERRAND Cedex 9 (FR); LAFAQUIERE, Vincent, 63040 CLERMONT-FERRAND Cedex 9 (FR)
(74) Mandataire: M.F.P. Michelin
(86) Numéro de dépôt international: PCT/FR2021/051973
(87) Numéro de publication internationale: WO 2022/106769

(56) Documents cités:
- EP-A1- 0 736 536
- WO-A1-2019/077232
- WO-A1-2019/077236
- FR-A1- 2 978 152

## Description

Le domaine de la présente invention est celui des composés organomagnésiens utilisés à titre de co-catalyseurs dans un système catalytique pour la préparation de polymères qui sont à la fois des copolymères à blocs à base d'éthylène et d'un comonomère, et des polymères fonctionnels amine, le comonomère étant un diène conjugué ou une α-monooléfine.

Il est connu d'utiliser des composés organomagnésiens comme co-catalyseur dans des systèmes catalytiques à base de métallocènes de terre rare pour préparer des copolymères d'oléfines et de 1,3-diènes. On peut se référer par exemple aux demandes de brevet EP 1 092 731, WO 2004035639, WO 2007054224 et WO 2018224776. Ces composés organomagnésiens sont typiquement un halogénure d'organomagnésien comme le chlorure d'organomagnésien ou un dialkylmagnésien comme le dibutylmagnésium, le butyléthymagnésium et le butyloctylmagnésium.

Il est également connu de préparer des polymères à blocs comprenant un bloc homopolymère d'un 1,3-diène et un bloc copolymère d'éthylène et de 1,3-diène. Par exemple, la demande de brevet WO 2019077232 décrit un procédé de synthèse de tels polymères à blocs par la réaction d'un homopolymère vivant obtenu par polymérisation anionique d'un 1,3-diène avec un métallocène de terre rare en présence d'un co-catalyseur, suivie de la polymérisation subséquente d'un mélange d'éthylène et d'un 1,3-diène. Un inconvénient de ce procédé est la faible activité catalytique liée à la réaction d'activation du métal du métallocène qui implique autant de mole de métal du métallocène que de mole de co-catalyseur.

Il est également connu de préparer des copolymères à blocs d'éthylène et de 1,3-diène par polymérisation subséquente de charges monomères différentes, comme cela est décrit par exemple dans la demande de brevet EP 2599809.

Des copolymères d'éthylène et de 1,3-diène qui sont statistiques et qui portent une fonction amine en extrémité de chaîne sont aussi connus. Par exemple, ils peuvent être préparés par un procédé qui est décrit dans la demande de brevet WO 201709783 et qui utilise à titre de co-catalyseur un organomagnésien qui porte une fonction amine.

Les Demanderesses ont découvert une voie de synthèse qui permet de préparer par polymérisation catalytique avec une forte activité catalytique des copolymères à base d'éthylène et d'un comonomère qui sont à la fois des polymères à blocs et des polymères fonctionnels amine en extrémité de chaîne, le comonomère étant un diène conjugué ou une α-monooléfine. La synthèse est rendue possible grâce à l'utilisation d'un nouveau co-catalyseur organomagnésien dans un système catalytique comprenant un métallocène de terre rare.

Ainsi, un premier objet de l'invention est un composé diorganomagnésien de formule (I)

R^{B}-Mg-R^{A} (I)

R^{A} étant différent de R^{B},
R^{A} étant une chaîne polymère d'un premier monomère choisi dans le groupe des monomères constitué par les 1,3-diènes, les α-monoléfines aromatiques et leurs mélanges, la chaîne polymère ayant une première extrémité liée à l'atome de magnésium et une deuxième extrémité portant une fonction amine,
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle, à la condition que si l'un des 2 atomes de carbone en ortho est substitué par un isopropyle, le deuxième atome de carbone en ortho n'est pas substitué par un isopropyle.

Un deuxième objet de l'invention est un système catalytique à base au moins d'un métallocène de formule (IIIa) ou (IIIb) et d'un composé diorganomagnésien conforme à l'invention à titre de co-catalyseur,

{P(Cp¹)(Cp²)Y} (IIIa)

Cp³Cp⁴Y (IIIb)

Y désignant un groupe comportant un atome d'une terre rare,
Cp¹, Cp², Cp³ et Cp⁴, identiques ou différents, étant choisis dans le groupe constitué par les groupes fluorényles, les groupes cyclopentadiényles et les groupes indényles, les groupes étant substitués ou non substitués,
P étant un groupe pontant les deux groupes Cp¹ et Cp², et comprenant un atome de silicium ou de carbone.

Un troisième objet de l'invention est un procédé de préparation d'un polymère qui comprend la polymérisation d'un deuxième monomère en présence d'un système catalytique conforme à l'invention, le deuxième monomère étant l'éthylène ou un mélange d'éthylène et d'un comonomère, le comonomère étant un 1,3-diène, une α-monooléfine ou leur mélange.

Un quatrième objet de l'invention est un polymère à blocs susceptible d'être obtenu par le procédé conforme à l'invention.

### Description détaillée

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Par l'expression « à base de » utilisée pour définir les constituants du système catalytique, on entend le mélange de ces constituants, ou le produit de la réaction d'une partie ou de la totalité de ces constituants entre eux.

Le composé conforme à l'invention de formule (I) est appelé ci-après composé diorganomagnésien asymétrique, puisque les deux groupes représentés par les symboles R^{B} et R^{A} sont différents l'un de l'autre.

R^{B}-Mg-R^{A} (I)

Le groupe représenté par le symbole R^{A} est une chaîne polymère contenant des unités d'un premier monomère choisi dans le groupe des monomères constitué par les 1,3-diènes, les α-monoléfines aromatiques et leurs mélanges. Conviennent comme 1,3-diène les 1,3-diènes ayant de 4 à 20 atomes de carbone. Le 1,3-diène en tant que premier monomère est préférentiellement le 1,3-butadiène, l'isoprène ou leur mélange. L'α-monoléfine aromatique en tant que premier monomère est une α-monoléfine de formule CH₂=CH-Ar, Ar représentant un groupe aromatique, substitué ou non. Le groupe Ar est de préférence phényle ou aryle. L'α-monoléfine aromatique en tant que premier monomère est préférentiellement le styrène ou un styrène substitué par un ou plusieurs groupes alkyles, plus préférentiellement le styrène. De préférence, R^{A} représente une chaîne homopolymère de 1,3-butadiène, d'isoprène ou de styrène ou une chaîne copolymère de monomères choisis parmi le 1,3-butadiène, l'isoprène et le styrène.

La chaîne polymère représentée par le symbole R^{A} a aussi pour caractéristique d'être une chaîne fonctionnelle. Elle porte une fonction amine en extrémité de chaîne (en anglais « chain end »). La fonction amine est une amine primaire, secondaire ou tertiaire, de préférence tertiaire.

Le groupe représenté par le symbole R^{B} a pour caractéristique essentielle de comprendre un noyau benzénique substitué par l'atome de magnésium. Les deux atomes de carbone du noyau benzénique en ortho du magnésium portent un substituant, identique ou différent. Alternativement l'un des deux atomes de carbone du noyau benzénique en ortho du magnésium peut porter un substituant, l'autre atome de carbone du noyau benzénique en ortho du magnésium peut former un cycle. Le substituant est un méthyle, un éthyle ou un isopropyle. Dans le cas où l'un des 2 atomes de carbone du noyau benzénique en ortho du magnésium est substitué par un isopropyle, le deuxième atome de carbone du noyau benzénique en ortho du magnésium n'est pas substitué par un isopropyle. De préférence, les atomes de carbone du noyau benzénique en ortho du magnésium sont substitués par un méthyle ou un éthyle. De manière plus préférentielle, les atomes de carbone du noyau benzénique en ortho du magnésium sont substitués par un méthyle.

Selon un mode de réalisation préférentiel, le composé diorganomagnésien asymétrique répond à la formule (II) dans laquelle R^{A} est une chaîne polymère telle que définie précédemment, R₁ et R₅, identiques ou différents, représentent un méthyle ou un éthyle et R₂, R₃ et R₄, identiques ou différents, représentent un atome d'hydrogène ou un alkyle. De préférence, R₁ et R₅ représentent un méthyle. De préférence, R₂ et R₄ représentent un atome hydrogène.

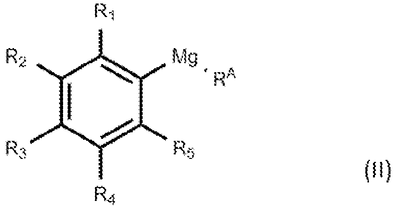

Selon une variante préférentielle, R₁, R₃ et R₅ sont identiques. Selon une variante plus préférentielle, R₂ et R₄ représentent un hydrogène et R₁, R₃ et R₅ sont identiques. Dans une variante davantage préférentielle, R₂ et R₄ représentent un hydrogène et R₁, R₃ et R₅ représentent un méthyle.

Selon un mode de réalisation préférentiel, la chaîne polymère représentée par le symbole R^{A} est préparée par polymérisation anionique.

Le composé diorganomagnésien asymétrique conforme à l'invention peut être préparé par un procédé qui comprend les étapes suivantes :
- la mise en contact d'un polymère anionique vivant R^{A}Li avec un halogénure d'un organomagnésien de formule R^{B}-Mg-X,
- la réaction du polymère anionique vivant et de l'halogénure,

X étant un halogène choisi dans le groupe constitué par le chlore, le fluor, le brome et l'iode, R^{B} et R^{A} étant tels que définis précédemment.
X est préférentiellement un atome de brome ou un atome de chlore. X est plus préférentiellement un atome de brome.

Le polymère anionique vivant utile à la synthèse du composé organométallique de formule R^{A}Li est typiquement une chaîne polymère ayant une première extrémité qui porte une fonction amine et une deuxième extrémité qui porte un carbanion. Il résulte généralement des réactions d'amorçage et de propagation d'une chaîne polymère dans la polymérisation anionique du premier monomère. Les 1,3-diènes, les α-monoléfines aromatiques et leurs mélanges qui peuvent être utilisés comme premier monomère sont bien connus pour polymériser ou copolymériser ensemble par voie anionique et pour former des chaînes polymères ou copolymères vivantes. Les procédés de polymérisation de ces monomères sont aussi bien connus et largement décrits.

Dans la réaction d'amorçage de la réaction de polymérisation est utilisé comme amorceur un amidure de lithium ou un organolithien portant une fonction amine. De tels amorceurs ont été décrits par exemple dans les brevets EP 0 590 490 B1 et EP 0 626 278 B1. A titre d'amidure de lithium, on peut citer l'amidure de lithium de la pyrrolidine ou l'amidure de lithium de l'hexaméthylèneimine. A titre d'organolithien portant une fonction amine, conviennent par exemple le diméthylaminopropyllithium et le 3-pyrrolidinopropyllithium. Avantageusement, l'amorceur est l'amidure de lithium de l'hexaméthylèneimine, auquel cas la fonction amine qui est en extrémité du copolymère à bloc est le groupe hexaméthylèneimino. L'amorceur est utilisé à un taux choisi en fonction de la longueur de chaîne souhaitée du polymère vivant et peut donc varier dans une large mesure.

Le polymère anionique vivant est donc obtenu de façon conventionnelle par polymérisation anionique du premier monomère dans un solvant, dit solvant de polymérisation. Le solvant de polymérisation peut être tout solvant hydrocarboné connu pour être utilisé dans la polymérisation de monomères 1,3-diènes et α-monoléfines aromatiques. Le solvant de polymérisation est préférentiellement un solvant hydrocarboné, mieux aliphatique tel que l'hexane, le cyclohexane ou le méthylcyclohexane.

Le solvant de polymérisation du premier monomère peut comprendre un additif pour contrôler la microstructure de la chaîne polymère et la vitesse de la réaction de polymérisation. Cet additif peut être un agent polaire tel qu'un éther ou une amine tertiaire. L'additif est le plus souvent utilisé en faible quantité, notamment pour limiter les réactions de désactivation des sites qui propagent la réaction de polymérisation anionique. La quantité d'additif dans le solvant de polymérisation, traditionnellement indexée sur la quantité d'amorceur utilisé dans le milieu de polymérisation, est réglée selon la microstructure souhaitée de la chaîne polymère et dépend donc du pouvoir complexant de l'additif.

Le ratio entre la quantité de solvant et la quantité de premier monomère utile à la formation du polymère vivant est choisi par l'homme du métier selon la viscosité souhaitée de la solution de polymère vivant. Cette viscosité dépend non seulement de la concentration de la solution polymère, mais aussi de nombreux autres facteurs comme la longueur des chaînes polymères, les interactions intermoléculaires entre les chaînes polymères vivantes, le pouvoir complexant du solvant, la température de la solution polymère. Par conséquent, l'homme du métier ajuste la quantité de solvant au cas par cas.

La température de polymérisation pour former le polymère vivant peut varier dans une large mesure. Elle est choisie en fonction notamment de la stabilité de la liaison carbone-métal dans le solvant de polymérisation, des coefficients de vitesse relatifs de la réaction d'amorçage et de la réaction de propagation, de la microstructure visée du polymère vivant. Traditionnellement, elle varie dans un domaine allant de -20 à 100°C, préférentiellement de 20 à 70°C.

De préférence, le polymère anionique vivant est un polymère vivant obtenu par polymérisation anionique du 1,3-butadiène, de l'isoprène, du styrène ou d'un mélange de deux d'entre eux ou des trois. Autrement dit, le premier monomère est préférentiellement le 1,3-butadiène, l'isoprène, le styrène ou d'un mélange de deux d'entre eux ou des trois.

Le polymère anionique vivant peut être un homopolymère ou bien un copolymère dans le cas où le premier monomère est un mélange de monomères. Le copolymère peut être statistique ou bloc, puisque l'insertion des monomères dans la chaîne polymère peut être contrôlée avec des conditions opératoires connues des procédés de polymérisation anionique. Par exemple, il est connu que la polarité du solvant de polymérisation et le mode d'alimentation des monomères dans le milieu de polymérisation anionique influencent l'incorporation relative des monomères.

Dans la préparation du composé diorganomagnésien asymétrique conforme à l'invention, la mise en contact du polymère anionique vivant avec l'halogénure d'un organomagnésien se fait préférentiellement par l'ajout d'une solution du polymère anionique vivant R^{A}Li à une solution de l'halogénure d'un organomagnésien R^{B}-Mg-X. La solution du polymère anionique vivant R^{A}Li est généralement une solution dans un solvant hydrocarboné, de préférence aliphatique tel que le n-hexane, le cyclohexane ou le méthylcyclohexane. La solution de l'halogénure d'un organomagnésien R^{B}-Mg-X est généralement une solution dans un éther, de préférence le diéthyléther ou le dibutyléther. La concentration du polymère anionique vivant R^{A}Li est préférentiellement de 0.0001 à 1 mole d'équivalent lithium/L, plus préférentiellement de 0.0005 à 0.2 mole d'équivalent lithium /L, celle de la solution de l'organomagnésien R^{B}-Mg-X préférentiellement de 0.1 à 5 mol/L, plus préférentiellement de 0.1 à 3 mol/L.

La réaction entre le polymère anionique vivant R^{A}Li et de l'halogénure d'un organomagnésien R^{B}-Mg-X est conduite typiquement à une température allant de 0°C à 60°C. La mise en contact est réalisée de préférence à une température comprise entre 0°C et 23°C.

Comme toute synthèse faite en présence de composés organométalliques, la mise en contact et la réaction ont lieu dans des conditions anhydres sous atmosphère inerte. Typiquement, les solvants et les solutions sont utilisés sous azote ou argon anhydre. Les différentes étapes du procédé sont conduites généralement sous agitation.

Une fois le composé diorganomagnésien asymétrique formé, il est récupéré généralement en solution après filtration conduite sous atmosphère inerte et anhydre. La solution du composé diorganomagnésien asymétrique est typiquement stockée avant son utilisation dans des récipients hermétiques, par exemple des bouteilles capsulées, à une température comprise entre -25°C et 23°C.

Comme tout composé organomagnésien, le composé diorganomagnésien R^{B}-Mg-R^{A} utile aux besoins de l'invention peut se présenter sous la forme d'une entité monomère (R^{B}-Mg-R^{A})₁ ou sous la forme d'une entité polymère (R^{B}-Mg-R^{A})ₚ, p étant un nombre entier supérieur à 1, notamment dimère (R^{B}-Mg-R^{A})₂. Par ailleurs, qu'il soit sous la forme d'une entité monomère ou polymère, il peut également se présenter sous la forme d'une entité coordinée à une ou plusieurs molécules d'un solvant, de préférence d'un éther tel que le diéthyléther, le tétrahydrofurane ou le méthyltétrahydrofurane.

Le composé diorganomagnésien asymétrique conforme à l'invention est tout particulièrement destiné à être utilisé comme co-catalyseur dans un système catalytique comprenant un complexe organométallique et utile à la polymérisation ou la copolymérisation d'oléfines ou de diènes. Le complexe organométallique est typiquement un métallocène ou un hémimétallocène de terre rare.

Le composé diorganomagnésien asymétrique a pour rôle d'activer le complexe organométallique vis-à-vis de la réaction de polymérisation, notamment dans la réaction d'amorçage de polymérisation. Il peut se substituer au co-catalyseur des systèmes catalytiques décrits par exemple dans les documents EP 1092731 A1, WO 2004035639 A1, WO 2005028526 A1, WO2007045223 A2, WO2007045224 A2.

En particulier, le composé diorganomagnésien asymétrique conforme à l'invention est un des constituants essentiels d'un système catalytique, autre objet de l'invention.

Le système catalytique conforme à l'invention a donc pour constituants de base le composé diorganomagnésien asymétrique conforme à l'invention et un métallocène de formule (IIIa) ou (IIIb)

{P(Cp¹)(Cp²)Y} (IIIa)

Cp³Cp⁴Y (IIIb)

Y désignant un groupe comportant un atome d'une terre rare,
Cp¹, Cp², Cp³ et Cp⁴, identiques ou différents, étant choisis dans le groupe constitué par les groupes fluorényles, les groupes cyclopentadiényles et les groupes indényles, les groupes étant substitués ou non substitués,
P étant un groupe pontant les deux groupes Cp¹ et Cp², et comprenant un atome de silicium ou de carbone.

On rappelle que les terres rares sont des métaux et désignent les éléments scandium, yttrium et les lanthanides dont le numéro atomique varie de 57 à 71.

Selon une première variante de l'invention, le métallocène utilisé comme constituant de base dans le système catalytique conforme à l'invention répond à la formule (IIIa)

{P(Cp¹)(Cp²)Y} (IIIa)

dans laquelle
Y désigne un groupe comportant un atome d'une terre rare,
Cp¹ et Cp², identiques ou différents, sont choisis dans le groupe constitué par les groupes fluorényles, les groupes cyclopentadiényles et les groupes indényles, les groupes étant substitués ou non substitués,
P est un groupe pontant les deux groupes Cp¹ et Cp², et comprenant un atome de silicium ou de carbone.

Selon une deuxième variante de l'invention, le métallocène utilisé comme constituant de base dans le système catalytique conforme à l'invention répond à la formule (IIIb)

Cp³Cp⁴Y (IIIb)

dans laquelle
Y désigne un groupe comportant un atome d'une terre rare,
Cp³ et Cp⁴, identiques ou différents, sont choisis dans le groupe constitué par les groupes fluorényles, les groupes cyclopentadiényles et les groupes indényles, les groupes étant substitués ou non substitués.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone ou encore par des radicaux trialkylsilyles tels que SiMe₃. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

A titre de groupes fluorényles substitués, on peut citer ceux substitués en position 2,7, 3 ou 6, particulièrement le 2,7-ditertiobutyle-fluorényle, le 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

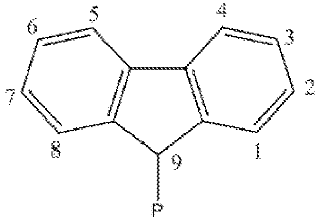

A titre de groupes cyclopentadiényles substitués, on peut citer ceux substitués aussi bien en position 2 (ou 5) qu'en position 3 (ou 4), particulièrement ceux substitués en position 2, plus particulièrement le groupe tétraméthylcyclopentadiènyle. La position 2 (ou 5) désigne la position de l'atome de carbone qui est adjacent à l'atome de carbone auquel est attaché le pont P, comme cela est représenté dans le schéma ci-après.

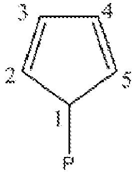

A titre de groupes indényles substitués, on peut citer particulièrement ceux substitués en position 2, plus particulièrement le 2-méthylindényle, le 2-phénylindényle. La position 2 désigne la position de l'atome de carbone qui est adjacent à l'atome de carbone auquel est attaché le pont P, comme cela est représenté dans le schéma ci-après.

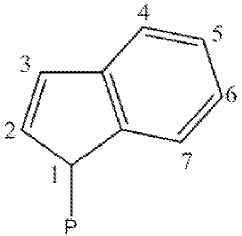

De préférence, le métallocène est de formule (IIIa).

Selon un mode de réalisation préférentiel de l'invention, Cp¹ et Cp² sont identiques et sont choisis dans le groupe constitué par les groupes fluorényles substitués et le groupe fluorényle non substitué de formule C₁₃H₈. Le système catalytique selon ce mode de réalisation préférentiel a la particularité de conduire à des copolymères de butadiène et d'éthylène qui comprennent en plus des unités monomères éthylène et des unités butadiène des unités cycliques, unités 1,2-cyclohexane de formule suivante :

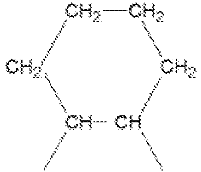

Les unités cycliques résultent d'une insertion particulière des monomères éthylène et 1,3-butadiène dans la chaîne polymère, en plus des unités conventionnelles d'éthylène et de 1,3-butadiène, respectivement -(CH₂-CH₂)-, -(CH₂-CH=CH-CH₂)- et -(CH₂-CH(C=CH₂))-. Le mécanisme d'obtention d'une telle microstructure est par exemple décrit dans le document Macromolecules 2009, 42, 3774-3779.

Avantageusement, Cp¹ et Cp² sont identiques et représentent chacun un groupe fluorényle non substitué de formule C₁₃H₈ , représenté par le symbole Flu.

Selon un mode de réalisation préférentiel de l'invention, le symbole Y représente le groupe Met-G, avec Met désignant l'atome de la terre rare et avec G désignant un groupe comprenant le motif borohydrure BH₄ ou désignant un atome d'halogène choisi dans le groupe constitué par le chlore, le fluor, le brome et l'iode. Avantageusement, G désigne un atome de chlore ou le groupe de formule (IV) :

(BH₄)_{(1+y)-}L_{y}-Nₓ (IV)

dans laquelle
L représente un métal alcalin choisi dans le groupe constitué par le lithium, le sodium et le potassium,
N représente une molécule d'un éther,
x, nombre entier ou non, est égal ou supérieur à 0,
y, nombre entier, est égal ou supérieur à 0.

Très avantageusement, G désigne le groupe de formule (IV).

Comme éther convient tout éther qui a le pouvoir de complexer le métal alcalin, notamment le diéthyléther et le tétrahydrofurane.

Selon l'un quelconque des modes de réalisation de l'invention, le métal du métallocène utile au besoin de l'invention, en l'espèce la terre rare, est de préférence un lanthanide dont le numéro atomique va de 57 à 71, de manière plus préférentielle le néodyme, Nd, auquel cas le symbole Met dans le groupe Met-G désigne préférentiellement un atome de lanthanide dont le numéro atomique varie de 57 à 71, plus préférentiellement un atome de néodyme.

Le pont P reliant les groupes Cp¹ et Cp² répond de préférence à la formule ZR¹R², dans laquelle Z représente un atome de silicium ou de carbone, R¹ et R², identiques ou différents, représentent chacun un groupe alkyle comprenant de 1 à 20 atomes de carbone, de préférence un méthyle. Dans la formule ZR¹R², Z représente avantageusement un atome de silicium, Si.

Le métallocène utile à la synthèse du système catalytique peut se trouver sous la forme de poudre cristallisée ou non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofurane ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Selon un mode de réalisation particulièrement préférentiel, le métallocène est de formule (III-1), (III-2), (III-3), (III-4) ou (III-5) :

[Me₂Si(Flu)₂Nd(µ-BH₄)₂Li(THF)] (III-1)

[{Me₂SiFlu₂Nd(µ-BH₄)₂Li(THF)}₂] (III-2)

[Me₂SiFlu₂Nd(µ-BH₄)(THF)] (III-3)

[{Me₂SiFlu₂Nd(µ-BH₄)(THF)}₂] (III-4)

[Me₂SiFlu₂Nd(µ-BH₄)] (III-5)

dans laquelle Flu représente le groupe C₁₃H₈.

Le système catalytique conforme à l'invention peut être préparé de façon traditionnelle par un procédé analogue à celui décrit dans la demande de brevet WO 2007054224 ou WO 2007054223. Par exemple on fait réagir dans un solvant hydrocarboné le composé diorganomagnésien asymétrique et le métallocène typiquement à une température allant de 20 à 80°C pendant une durée comprise entre 5 et 60 minutes. Les quantités de co-catalyseur et métallocène mises en réaction sont telles que le rapport entre le nombre de mole de Mg du co-catalyseur et le nombre de mole de métal de terre rare du métallocène va de préférence de 1 à 100, de manière plus préférentielle de 1 à moins de 10. La plage de valeurs allant de 1 à moins de 10 est notamment plus favorable pour l'obtention de polymères de masses molaires élevées. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du polymère conforme à l'invention.

Comme toute synthèse faite en présence de composé organométallique, la synthèse du métallocène, la synthèse du composé diorganomagnésien asymétrique et la synthèse du système catalytique ont lieu dans des conditions anhydres sous atmosphère inerte. Typiquement, les réactions sont conduites à partir de solvants et de composés anhydres sous azote ou argon anhydre. En particulier, les solvants sont généralement purifiés, par exemple de manière connue par distillation, par traitement sur des colonnes d'alumine, par bullage d'un gaz inerte comme l'azote ou l'argon ou par traitement avec un composé organométallique tel qu'un organolithien, un organomagnésien ou un organoaluminique.

Le système catalytique se présente généralement sous la forme d'une solution dans un solvant hydrocarboné. Le solvant hydrocarboné peut être aliphatique comme le méthylcyclohexane ou aromatique comme le toluène. Le solvant hydrocarboné est de préférence aliphatique, de manière plus préférentielle le méthylcyclohexane. Généralement, le système catalytique est stocké sous la forme d'une solution dans le solvant hydrocarboné avant d'être utilisé en polymérisation. On peut parler alors de solution catalytique qui comprend le système catalytique et le solvant hydrocarboné. La concentration de la solution catalytique est typiquement définie par la teneur en métal de métallocène dans la solution. La concentration en métal de métallocène a une valeur allant préférentiellement de 0.0001 à 0.2 mol/L, plus préférentiellement de 0.001 à 0.03 mol/L.

Le système catalytique conforme à l'invention est destiné à être utilisé dans un procédé de synthèse de copolymères à blocs et fonctionnels amine, notamment élastomères et utilisables dans des compositions de caoutchouc, par exemple pour pneumatique. L'utilisation du système catalytique selon l'invention permet de préparer par polymérisation catalytique avec une forte activité catalytique des polymères à base d'éthylène et de 1,3-diène ou d'α-monoléfine qui sont à la fois des copolymères à blocs et des polymères fonctionnels amine en extrémité de chaîne.

Le procédé de synthèse de copolymères à blocs et fonctionnels amine, autre objet de l'invention, comprend une étape de polymérisation d'un deuxième monomère en présence du système catalytique conforme. Le deuxième monomère est l'éthylène ou un mélange d'éthylène et d'un comonomère, le comonomère étant un 1,3-diène, une α-monooléfine ou leur mélange. On entend par α-monooléfine une α-oléfine qui a une seule double liaison carbone-carbone, les doubles liaisons dans les composés aromatiques n'étant pas prises en compte. Par exemple, le styrène est considéré comme une α-monooléfine. De préférence, le comonomère est le 1,3-butadiène, l'isoprène ou un mélange de deux ou des trois comonomères que sont 1,3-butadiène, l'isoprène et le styrène.

Comme le procédé met en œuvre la polymérisation d'un monomère, dit deuxième monomère, en présence d'un système catalytique qui comprend un co-catalyseur constitué d'une chaîne polymère R^{A}, la chaîne polymère R^{A} et la chaîne polymère résultant de la polymérisation du deuxième monomère sont constitutifs du copolymère à blocs synthétisé par le procédé conforme à l'invention. Les polymères synthétisés par le procédé conforme à l'invention sont donc des copolymères à blocs, dibloc ou multibloc. En effet, la chaîne polymère R^{A} peut être un homopolymère, un copolymère à blocs ou un copolymère statistique. La chaîne polymère résultant de la polymérisation du deuxième monomère qui résulte de la polymérisation du deuxième monomère peut être un copolymère statistique ou un copolymère à blocs, lorsque le deuxième monomère est un mélange de monomères.

De préférence, le deuxième monomère est l'éthylène ou un mélange d'un 1,3-diène et d'éthylène, le 1,3-diène en tant que comonomère étant de préférence le 1,3-butadiène, l'isoprène, ou leur mélange. Selon la microstructure et la longueur des chaînes polymères préparées par le procédé conforme à l'invention, le polymère peut être un élastomère.

La polymérisation du deuxième monomère est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Le deuxième monomère peut être introduit dans le réacteur contenant le solvant de polymérisation et le système catalytique ou inversement le système catalytique peut être introduit dans le réacteur contenant le solvant de polymérisation et le deuxième monomère. Le deuxième monomère et le système catalytique peuvent être introduits simultanément dans le réacteur contenant le solvant de polymérisation, notamment dans le cas d'une polymérisation en continu. La polymérisation est conduite typiquement dans des conditions anhydres et en l'absence d'oxygène, en présence éventuelle d'un gaz inerte. La température de polymérisation varie généralement dans un domaine allant de 40 à 150°C, préférentiellement 40 à 120°C. Elle est ajustée selon le deuxième monomère à polymériser. Si le deuxième monomère est un mélange de monomères contenant de l'éthylène, la copolymérisation est conduite préférentiellement à pression constante en monomères. Dans le cas où le deuxième monomère est un mélange de monomères, le deuxième bloc peut être statistique ou lui-même à bloc selon le mode d'alimentation respectif des monomères.

Dans le cas où la polymérisation d'un deuxième monomère est un mélange d'éthylène et de 1,3-diène dans un réacteur de polymérisation, un ajout continu d'éthylène et de 1,3-diène peut être réalisé dans le réacteur de polymérisation, auquel cas le réacteur de polymérisation est un réacteur alimenté. Ce mode de réalisation est tout particulièrement adapté pour une incorporation statistique de l'éthylène et du 1,3-diène.

Une fois que le taux de conversion souhaité de la réaction de polymérisation du deuxième monomère est atteint, la réaction de polymérisation est stoppée par une réaction de terminaison. Typiquement, la réaction de polymérisation est suivie d'une réaction avec un composé protique pour stopper la réaction de polymérisation tel qu'un alcool, typiquement le méthanol ou l'éthanol, ou avec un agent de fonctionnalisation pour fonctionnaliser le polymère. L'agent de fonctionnalisation est typiquement un composé connu pour réagir avec un composé ayant une liaison carbone-magnésium. A titre d'agent de fonctionnalisation conviennent en particulier les amines, les dihalogènes, les cétones, les esters, les alcoxysilanes comme par exemple l'iode, la 4,4'-bis(diéthylamino)benzophénone. Le copolymère à blocs peut être récupéré, notamment en le séparant du milieu réactionnel, par exemple en le coagulant dans un solvant provoquant sa coagulation ou en éliminant le solvant de polymérisation et tout monomère résiduel sous pression réduite ou sous l'effet d'un entraînement à la vapeur (opération de stripping).

Les copolymères à blocs et fonctionnels amine qui sont susceptibles d'être obtenus par le procédé conforme à l'invention ont pour caractéristique essentielle de comprendre deux blocs. Un des blocs, dit premier bloc, est une chaîne polymère d'un premier monomère choisi parmi les 1,3-diènes, les α-monoléfines aromatiques et leurs mélanges. Le deuxième bloc est une chaîne polymère d'un deuxième monomère choisi parmi l'éthylène et les mélanges d'éthylène et d'un comonomère, le comonomère étant un 1,3-diène, une α-monooléfine ou leur mélange. La fonction amine qui est en extrémité du polymère conforme à l'invention est portée par le premier bloc. La fonction amine est préférentiellement une amine tertiaire, plus préférentiellement le groupe hexaméthylèneimno.

Dans le cas où le deuxième bloc est un copolymère d'éthylène et d'un comonomère, les unités éthylène de formule -(CH₂-CH₂)- présentes dans le deuxième bloc représentent préférentiellement plus de 50% en moles des unités monomères du deuxième bloc.

Les polymères selon l'invention sont préparés avec une forte activité catalytique, ce qui rend leur préparation attractive au moins pour deux aspects. Le premier est le coût catalytique des polymères conformes à l'invention qui est bien moindre que celui des copolymères à blocs non fonctionnels déjà connus. Le deuxième aspect est la teneur des résidus catalytiques qui est aussi beaucoup plus faible dans les polymères conformes à l'invention que les copolymères à blocs non fonctionnels déjà connus.

Les caractéristiques précitées de la présente invention, ainsi que d'autres, seront mieux comprises à la lecture de la description suivante des exemples de réalisation de l'invention, donnés à titre illustratif et non limitatif.

### Exemples

### Préparation du bromure de 2-mésitylmagnésium :

Le toluène et le 2-méthyltétrahydrofurane (MeTHF) utilisés lors des synthèses ont été distillés sur sodium/benzophénone.

4.15 g (170 mmol, 3.4 équivalents) de magnésium sont introduits dans un ballon de 200 mL équipé d'une olive aimantée en boîte à gants. Environ 30 mg de diiode (0.12 mmol, 0.003 équivalent) sont introduits sur le magnésium. Le ballon est équipé d'une ampoule de coulée inerte de 100 mL. 50 mL de MeTHF sont introduits dans l'ampoule de coulée et 10 mL sont immédiatement coulés sur le magnésium sous agitation. 7.65 mL de 2-bromomésitylène (50 mmol, 1 équivalent) dégazé et séché sur tamis moléculaire activé sont introduits dans le ballon sous agitation à l'aide de l'ampoule de coulée. La solution de 2-bromomésitylène est coulée au goutte à goutte sur le magnésium pendant 1 h en contrôlant l'exothermie. L'agitation est maintenue 12 h à 20 °C. En fin de réaction, la solution est transférée à la canule filtrante dans un second ballon de 200 mL inerté. Cette solution est concentrée sous vide puis diluée dans 71 mL de toluène. La concentration en bromure de 2-mésitylmagnésium est estimée à 0.50 mol L⁻¹ (M).

### Préparation de l'amorceur hexaméthylèneimide lithium : HMNLi

384 mL de méthylcyclohexane (MCH) de la fontaine à solvant sont placés dans une bouteille Steinie de 750 mL. 4.75 mL d'hexaméthylèneimine (HMN) (42 mmol, 1 équivalent) sont dilués dans la bouteille contenant le MCH. Le contenu de la bouteille est dégazé pendant 10 min sous azote. 30.5 mL de BuLi dosé à 1.38 M (42 mmol, 1 équivalent) sont introduits dans la bouteille. Le temps de réaction est estimé à 1 heure. La concentration en Li actif déterminée par la méthode Gilman est de 0.087 M.

Six élastomères selon l'invention qui sont des copolymères à blocs et portant une fonction amine ont été préparés selon les modes opératoires des essais 1 à 6 décrits dans les exemples 1, 2 et 3.

Exemple 1 conforme à l'invention : préparation de deux polymères à blocs fonctionnels amine, les premiers blocs étant un polybutadiène, les deuxièmes blocs étant un copolymère statistique d'éthylène et de 1,3-butadiène, la fonction amine étant l'hexaméthylèneimine.

### Préparation du premier bloc :

Environ 86 mL de méthylcyclohexane sont introduits dans deux bouteilles Steinie de 250 mL. Le contenu des bouteilles est dégazé sous azote pendant 10 minutes. 82 mL de méthylcyclohexane sont ainsi récupérés dans chaque bouteille. 13.5 mL (9 g) de butadiène sont introduits à la seringue dans les bouteilles de l'essai 1 et 2.7 mL (1.8 g) sont introduits dans les bouteilles de l'essai 2. 10 mL de solution HMNLi à 0.087 M (0.87 mmol) sont ajoutés dans chacune des bouteilles. Les bouteilles sont agitées dans un bain d'eau à 53 °C pendant environ 2h00.

### Préparation du deuxième bloc :

### Pour chaque essai 1 et 2, le mode opératoire est le suivant :

2.4 mL (1.2 mmol, 1.4 équivalents) de bromure de 2-(mésitylmagnésium) sont introduits dans les bouteilles (essai1 : PB₁₀₀₀₀-Mg ou essai 2 : P_{B2000}-Mg). Un précipité blanc se forme (sel LiBr).

230 mL de méthylcyclohexane (MCH) sont introduits dans une bouteille Steinie de 750 mL. Le contenu de la bouteille est dégazé sous azote une dizaine de minutes. 220 mL de méthylcyclohexane sont ainsi récupérés. 46 mg (72 µmol en néodyme) de métallocène {(Me₂Si(C₁₃H₈)₂)Nd(BH₄)[(BH₄)Li(THF)]}₂ sont pesés dans une bouteille Steinie de 250 mL en boîte à gants. 0.6 mL (0.3 mmol) de bromure de 2-mésitylmagnésium sont introduits dans la bouteille de 750 mL afin de neutraliser les impuretés provenant du méthylcyclohexane.. Environ 1/3 du contenu de la bouteille de 750 mL est transféré dans la bouteille de 250 mL qui contient le métallocène par un système de double aiguille.

1/2 du contenu de la bouteille de 750 mL contenant le méthylcyclohexane est introduit dans le réacteur inerté sous agitation (400 tours par minute) à 77 °C. Le contenu de la bouteille contenant le PB₁₀₀₀₀-Mg ou le P_{B2000}-Mg est transféré dans le réacteur après être revenu à température ambiante (23°C), puis sont aussi transférés dans le réacteur successivement le contenu de la bouteille de 250 mL contenant le complexe au néodyme, puis le reste de méthylcyclohexane de la bouteille de 750 mL. Le ratio molaire Mg/Nd est de 21. Le réacteur est dégazé sous vide jusqu'à formation de bulles de gaz, puis pressurisé à 3 bars avec un mélange éthylène/butadiène 80/20 (% molaire).

Lorsque la pression du ballast affiche la chute de pression correspondant à 9 g de monomères, le réacteur est dégazé avec 3 cycles évent/azote. 2 équivalents de solution de 4,4'-bis(diéthylamino)benzophénone à 0.2 mol/L (DEAB) dans le toluène (3.0 mmol), préalablement introduits dans une bouteille Steinie de 250 mL inertée, sont introduits dans le réacteur.

L'agitation est maintenue pendant 1 heure puis le chauffage est coupé et l'agitation arrêtée. Le milieu de polymérisation est désactivé avec quelques mL d'éthanol, puis vidé dans une barquette en aluminium et séché sous vide à 50 °C dans une étuve pendant 24 h.

Environ 2 g de polymère sont solubilisés dans 20 mL de MCH, puis précipités dans environ 150 mL d'acétone. L'opération est répétée 3 fois de suite afin de laver le polymère.

Le polymère lavé sec est récupéré pour les analyses.

Exemple 2 conforme à l'invention : préparation de deux copolymères à blocs fonctionnels amine, les premiers blocs étant un polybutadiène, les deuxièmes blocs étant un copolymère statistique d'éthylène et de 1,3-butadiène, la fonction amine étant l'hexaméthylèneimine :

### Préparation du premier bloc :

Environ 86 mL de MCH sont introduits dans 2 bouteilles Steinie de 250 mL. Le contenu des bouteilles est dégazé sous azote pendant 10 minutes. 82 mL de MCH sont ainsi récupérés dans chaque bouteille. 13.5 mL (9 g) de butadiène sont introduits à la seringue dans les bouteilles des essais 3 et 4.

0.7 mL d'ETE (Ethyl tétrahydro-furfuryl éther) à 0.1 M dans le méthylcyclohexane (0.07 mmol) sont introduits dans la bouteille de l'essai 3 et 1.0 mL de TMEDA (N,N,N',N'-tétraméthyléthylènediamine ) à 0.5 M dans le méthylcyclohexane (0.5 mmol) sont introduits dans la bouteille de l'essai 4.

10 mL de solution HMNLi à 0.087 M (0.87 mmol) sont ajoutés dans chacune des bouteilles. Les bouteilles sont agitées dans un bain d'eau à 53 °C pendant environ 1h00.

### Préparation du deuxième bloc :

Le mode opératoire est identique à celui de l'exemple 1.

Exemple 3 conforme à l'invention : préparation de deux copolymères à blocs fonctionnels amine, les premiers blocs étant un copolymère statistique de styrène et de 1,-butadiène, les deuxièmes blocs étant un copolymère statistique d'éthylène et de 1,3-butadiène, la fonction amine étant l'hexaméthylèneimine :

### Préparation du premier bloc :

Environ 86 mL de MCH sont introduits dans 4 bouteilles Steinie de 250 mL. Le contenu des bouteilles est dégazé sous azote pendant 10 minutes. 82 mL de MCH sont ainsi récupérés dans chaque bouteille. 10.2 mL (6.75 g) de butadiène et 2.5 mL (2.25 g) de styrène sont introduits à la seringue dans les bouteilles des essais 5 et 6.

0.7 mL d'ETE (Ethyl tétrahydro-furfuryl éther) à 0.1 M dans le méthylcyclohexane (0.07 mmol) sont introduits dans l'essai 5 et 1.0 mL de TMEDA (N,N,N',N'-tétraméthyléthylènediamine ) 0.5 M (0.5 mmol) sont introduits dans l'essai 6.

10 mL de solution HMNLi [0.087] (0.87 mmol) préparés sont ajoutés dans chacune des bouteilles. Les bouteilles sont agitées dans un bain d'eau à 53 °C pendant environ 1h00.

### Préparation du deuxième bloc :

Le mode opératoire est identique à celui de l'exemple 1.

Exemple 4 non conforme à l'invention : préparation d'un copolymère à blocs fonctionnel amine par une polymérisation non catalytique, le premier bloc étant un polybutadiène, le deuxième bloc étant un polyéthylène.

### Préparation du premier bloc :

Environ 300 mL de toluène sont introduits dans une bouteille Steinie de 750 mL. Le contenu de la bouteille est dégazé sous azote pendant 10 minutes. 1 g de butadiène est introduit à la seringue dans la bouteille. 1 mL de solution HMNLi à 0.1 M (0.1 mmol) est ajouté dans la bouteille et agitée dans un bain d'eau à 60 °C pendant 1h44.

### Préparation du deuxième bloc :

Transférer la totalité du volume de la solution contenant le premier bloc par un système de double aiguille, dans une bouteille de 750mL contenant 62 mg (96.9 µmol en néodyme) de métallocène {(Me₂Si(C₁₃H₈)₂)Nd(BH₄)[(BH₄)Li(THF)]}₂ afin d'activer le complexe au néodyme. La bouteille est ensuite enrichie en éthylène jusqu'à atteindre une pression d'environ 3 Bars. La bouteille est ensuite maintenue à 60°C pendant 1h20.

Le milieu de polymérisation est désactivé avec quelques mL d'éthanol, puis vidé dans une barquette en aluminium et séché sous vide à 50 °C dans une étuve pendant 24 h. 1.25 g de polymère sont récupérés (essai 7).

Les polymères ont été caractérisés par analyse SEC haut poids aminée et RMN ¹H/¹³C pour déterminer respectivement leur masse molaire moyenne en nombre Mn et leur microstructure.

### Méthode SEC :

La chromatographie à exclusion de taille (SEC) permet le fractionnement des chaînes de polymères dans un solvant selon leur volume hydrodynamique. Comme tout système chromatographique, la technique est basée sur l'élution d'un soluté (le polymère) à travers une colonne contenant une phase stationnaire. Le système est composé dans cet ordre : d'un réservoir de solvant, d'un système de pompage, d'un injecteur, d'un jeu de colonnes et de détecteurs. La chaîne de mesure est équipée d'un module Waters Alliance e2695 et d'un réfractomètre Waters fRI410.

La phase mobile est éluée avec un débit de 1 mL/min. Le polymère est solubilisé dans le THF en présence de 1%wt de diisopropylamine et de 1%wt de triethylamine à une concentration comprise de 1 g/L. Un volume de 100 µL est injecté à travers un jeu de 3 colonnes de chromatographie d'exclusion stérique de marque *AGILENT* (MIXED B LS). Les colonnes sont thermostatées dans un four à 35°C. La phase stationnaire des colonnes est à base d'un gel de polystyrène divinylbenzène à porosité maîtrisée. Les chaînes de polymères sont séparées selon le volume hydrodynamique qu'elles occupent quand elles sont solubilisées dans le solvant. Plus elles occupent un volume important, moins les pores des colonnes leur sont accessibles et plus leur temps d'élution est faible. La détection est assurée par un réfractomètre (RI) thermostatés à 35°C. A chaque volume d'élution est associée une masse via l'étalonnage de Moore (passage de standard certifié : polystyrènes standards (Masses molaires au pic *M*ₚ : 1620 à 2 570 000 g mol⁻¹) de Polymer Standard Service (Mainz). Le logiciel WATERS : EMPOWER est utilisé pour l'acquisition et l'analyse des données. Il est alors possible de déterminer les masses molaires moyennes en nombre (Mn), les masses molaires moyennes en masse (Mw) ainsi que la dispersité (D = Mw/Mn).

### Méthode RMN ¹H:

Les spectres de résonance magnétique nucléaire (RMN) sont acquis sur un spectromètre Brüker Avance III 500 MHz équipé d'une cryo-sonde « large bande » BBIz-grad 5 mm. Les échantillons sont solubilisés dans le 1,2-dichlorobenzène d4. La calibration est réalisée sur l'impureté protonée du 1,2-dichlorobenzène à 7.20 ppm en RMN 1H. L'expérience RMN 1H quantitative, utilise une séquence simple impulsion 30° et un délai de répétition de 5 secondes entre chaque acquisition.

Le déplacement chimique compris entre 5.36-5.10 ppm est attribué aux motifs 1,4 des unités butadiène, le signal compris entre 5.63 et 5.36 ppm est attribué aux motifs 1,2 des unités butadiène. Le signal à 1.18 ppm est attribué aux unités éthylène.

Les résultats figurent dans le tableau 1. La fonctionnalisation des copolymères à blocs réalisée par la réaction d'amorçage avec l'amorceur HMNLi et par la réaction de terminaison avec l'agent de modification DEAB est également mise en évidence par analyse RMN : le tableau 2 récapitule les déplacements chimiques en ppm des signaux pour les copolymères à blocs des essais 1 et 5. L'activité catalytique des polymères conformes à l'invention (essais 1 à 6) a été calculée et figure dans le tableau 3. L'activité catalytique du polymère obtenu par polymérisation non catalytique (essai 7) a été également calculée à titre de comparaison.

**[Table 1]**

| Essai | Mn g/mol | Ð | Ethylène/butadiène/styrène (% mol) |
|---|---|---|---|
| 1 | 21 860 | 1.26 | 60.6/39.4/0 |
| 2 | 23 640 | 1,71 | 77.8/22.2/0 |
| 3 | 21 790 | 1.20 | 59.9/40.1/0 |
| 4 | 23 790 | 1.37 | 60.1/39.9/0 |
| 5 | 22 310 | 1.24 | 62.0/35.5/2.8 |
| 6 | 21 780 | 1.49 | 59.3/37.6/3.1 |

**[Table 2]**

| Essai | Fonctionnalisation HMNLi | Fonctionnalisation DEAB |
|---|---|---|
| 1 | 3,13 (br, 2H, -CH2-HMN), 2,61 (br, 4H, HMN), | 7,24 (br, 4H), 6,59 (d, J = 8,3 Hz, 4H), 3,32 (quad, J = 7,4 Hz, 8H), 1,13 (t, J = 7,0 Hz, 12H) |
| 5 | 3,13 (br, 2H, -CH2-HMN, 2,61 (br, 4H, HMN, 1,60 (br, 8H, HMN), | 6,58 (br, 4H), 3,31 (br, 8H), 1,14 (br, 12H) |

| | | |
|---|---|---|
| HMN représentant le radical hexaméthylèneimino, d : doublet ; t : triplet ; quad : quadruplet ; br : broad, J : constante de couplage. | | |

**[Table 3]**

| Essai | Activité catalytique (kg mol⁻¹ h⁻¹) |
|---|---|
| 1 | 110 |
| 2 | 120 |
| 3 | 110 |
| 4 | 55 |
| 5 | 110 |
| 6 | 55 |
| 7 | 1.94 |

Les résultats montrent que l'utilisation du composé diorganomagnésien conforme à l'invention comme co-catalyseur dans un système catalytique comprenant un métallocène de terre rare permet la préparation de nouveaux copolymères à blocs fonctionnels amine en extrémité de chaîne avec une forte activité catalytique. Les polymères ainsi préparés ont la particularité de présenter un premier bloc d'un 1,3-diène et/ou d'une α-monoléfine aromatique qui porte la fonction amine et un deuxième bloc contenant des unités éthylène, le deuxième bloc pouvant porter lui aussi une fonction à son extrémité. La présence de la fonction amine en extrémité de chaîne et les compositions respectives des blocs permettent d'allier dans un seul et même polymère les propriétés d'un polymère portant une fonction amine en extrémité de chaîne à celles d'un copolymère à bloc formé d'un premier bloc d'un 1,3-diène et/ou d'une α-monoléfine aromatique et d'un deuxième bloc contenant des unités éthylène. Par ailleurs, le coût catalytique des polymères selon l'invention ainsi que leur teneur en résidus catalytiques en terre rare sont relativement faibles.

## Revendications

1. Composé diorganomagnésien de formule (I)
R^{B}-Mg-R^{A} (I)
R^{A} étant différent de R^{B},
R^{A} étant une chaîne polymère d'un premier monomère choisi dans le groupe des monomères constitué par les 1,3-diènes, les α-monoléfines aromatiques et leurs mélanges, la chaîne polymère ayant une première extrémité liée à l'atome de magnésium et une deuxième extrémité portant une fonction amine,
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle, à la condition que si l'un des 2 atomes de carbone en ortho est substitué par un isopropyle, le deuxième atome de carbone en ortho n'est pas substitué par un isopropyle.

2. Composé diorganomagnésien selon la revendication 1 dans lequel le composé diorganomagnésien est de formule (II) 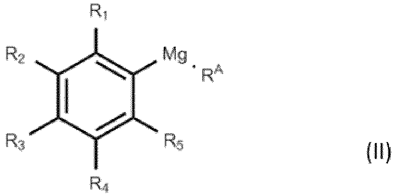
R₁ et R₅, identiques ou différents, représentent un méthyle ou un éthyle, de préférence un méthyle,
R₂, R₃ et R₄, identiques ou différents, étant un atome d'hydrogène ou un alkyle R^{A} étant défini selon la revendication 1.

3. Composé diorganomagnésien selon l'une quelconque des revendications 1 à 2 dans lequel R^{A} est une chaîne homopolymère de 1,3-butadiène, d'isoprène ou de styrène ou une chaîne copolymère de monomères choisis parmi le 1,3-butadiène, l'isoprène et le styrène.

4. Composé diorganomagnésien selon l'une quelconque des revendications 1 à 3 dans lequel la fonction amine est une amine tertiaire.

5. Système catalytique à base au moins :
- d'un métallocène de formule (IIIa) ou (IIIb),
- d'un composé diorganomagnésien à titre de co-catalyseur,
{P(Cp¹)(Cp²)Y} (Illa)
Cp³Cp⁴Y (IIIb)
Y désignant un groupe comportant un atome d'une terre rare,
Cp¹, Cp², Cp³ et Cp⁴, identiques ou différents, étant choisis dans le groupe constitué par les groupes fluorényles, les groupes cyclopentadiényles et les groupes indényles, les groupes étant substitués ou non substitués,
P étant un groupe pontant les deux groupes Cp¹ et Cp², et comprenant un atome de silicium ou de carbone,
le composé diorganomagnésien étant un composé diorganomagnésien défini à l'une quelconque des revendications 1 à 4.

6. Système catalytique selon la revendication 5 dans lequel Cp¹ et Cp² sont identiques et sont choisis dans le groupe constitué par les groupes fluorényles substitués et le groupe fluorényle non substitué de formule C₁₃H₈.

7. Système catalytique selon l'une quelconque des revendications 5 à 6 dans lequel la terre rare est un lanthanide dont le numéro atomique varie de 57 à 71, de préférence le néodyme.

8. Système catalytique selon l'une quelconque des revendications 5 à 7 dans lequel le pont P répond à la formule ZR¹R², Z représentant un atome de silicium ou de carbone, R¹ et R², identiques ou différents, représentant chacun un groupe alkyle comprenant de 1 à 20 atomes de carbone, de préférence un méthyle.

9. Système catalytique selon la revendication 8 dans lequel Z est Si.

10. Système catalytique selon l'une quelconque des revendications 5 à 9 dans lequel le symbole Y représente le groupe Met-G, avec Met désignant l'atome de la terre rare et G désignant un groupe comprenant le motif borohydrure BH₄ ou désignant un atome d'halogène choisi dans le groupe constitué par le chlore, le fluor, le brome et l'iode.

11. Système catalytique selon la revendication 10 dans lequel G désigne un atome de chlore ou le groupe de formule (IV)
(BH₄)_{(1+y)-}L_{y}-Nₓ (IV)
dans laquelle
L représente un métal alcalin choisi dans le groupe constitué par le lithium, le sodium et le potassium,
N représente une molécule d'un éther, de préférence diéthyléther ou tétrahydrofurane, x, nombre entier ou non, est égal ou supérieur à 0,
y, nombre entier, est égal ou supérieur à 0.

12. Procédé de préparation d'un polymère qui comprend la polymérisation d'un deuxième monomère en présence d'un système catalytique défini à l'une quelconque des revendications 5 à 11, le deuxième monomère étant l'éthylène ou un mélange d'éthylène et d'un comonomère, le comonomère étant un 1,3-diène, une α-monooléfine ou leur mélange.

13. Procédé de préparation d'un polymère selon la revendication 12 dans lequel le comonomère est le 1,3-butadiène, l'isoprène ou un mélange de deux ou des trois comonomères que sont 1,3-butadiène, l'isoprène et le styrène.

14. Procédé de préparation d'un polymère selon l'une quelconque des revendications 12 à 13 dans lequel la polymérisation du deuxième monomère est suivie d'une réaction avec un composé protique ou avec un agent de fonctionnalisation.

## Patentansprüche

1. Diorganomagnesiumverbindung der Formel (I)
R^{B}-Mg-R^{A} (I)
wobei R^{A} von R^{B} verschieden ist,
R^{A} für eine Polymerkette eines ersten Monomers, das aus der Gruppe der Monomere bestehend aus 1,3-Dienen, aromatischen α-Monoolefinen und Mischungen davon ausgewählt ist, wobei die Polymerkette ein erstes Ende, das an das Magnesiumatom gebunden ist, und ein zweites Ende, das eine Aminfunktion trägt, aufweist,
wobei R^{B} einen durch das Magnesiumatom substituierten Benzolkern umfasst, wobei eines der Kohlenstoffatome des Benzolkerns in ortho-Position zu dem Magnesium durch ein Methyl, ein Ethyl oder ein Isopropyl substituiert ist oder mit dem Kohlenstoffatom, das sein nächster Nachbar ist und das in meta-Position zu dem Magnesium steht, einen Ring bildet, wobei das andere Kohlenstoffatom des Benzolkerns in ortho-Position zu dem Magnesium durch ein Methyl, ein Ethyl oder ein Isopropyl substituiert ist, mit der Maßgabe, dass dann, wenn eines der 2 Kohlenstoffatome in ortho-Position durch ein Isopropyl substituiert ist, das zweite Kohlenstoffatom in ortho-Position nicht durch ein Isopropyl substituiert ist.

2. Diorganomagnesiumverbindung nach Anspruch 1, wobei die Diorganomagnesiumverbindung die Formel (II) aufweist: 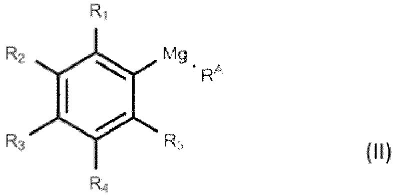
wobei R₁ und R₅ gleich oder verschieden sind und für ein Methyl oder ein Ethyl, vorzugsweise ein Methyl, stehen,
wobei R₂, R₃ und R₄ gleich oder verschieden sind und für ein Wasserstoffatom oder ein Alkyl stehen,
wobei R^{A} gemäß Anspruch 1 definiert ist.

3. Diorganomagnesiumverbindung nach einem der Ansprüche 1 bis 2, wobei R^{A} für eine 1,3-Butadien-, Isopren- oder Styrol-Homopolymerkette oder eine Copolymerkette aus Monomeren, die aus 1,3-Butadien, Isopren und Styrol ausgewählt sind, steht.

4. Diorganomagnesiumverbindung nach einem der Ansprüche 1 bis 3, wobei es sich bei der Aminfunktion um ein tertiäres Amin handelt.

5. Katalytisches System auf Basis von mindestens:
- einem Metallocen der Formel (IIIa) oder (IIIb),
- einer Diorganomagnesiumverbindung als Cokatalysator,
{P(Cp¹)(Cp²)Y} (IIIa)
Cp³Cp⁴Y (IIIb)
wobei Y für eine Gruppe steht, die ein Seltenerdmetallatom umfasst,
Cp¹, Cp², Cp³ und Cp⁴ gleich oder verschieden sind und aus der Gruppe bestehend aus Fluorenylgruppen, Cyclopentadienylgruppen und Indenylgruppen ausgewählt sind, wobei die Gruppen substituiert oder unsubstituiert sind,
wobei P für eine Gruppe steht, die die beiden Gruppen Cp¹ und Cp² verbrückt und ein Silicium- oder Kohlenstoffatom umfasst,
wobei es sich bei der Diorganomagnesiumverbindung um eine in einem der Ansprüche 1 bis 4 definierte Diorganomagnesiumverbindung handelt.

6. Katalytisches System nach Anspruch 5, wobei Cp¹ und Cp² gleich sind und aus der Gruppe bestehend aus substituierten Fluorenylgruppen und der unsubstituierten Fluorenylgruppe der Formel C₁₃H₈ ausgewählt sind.

7. Katalytisches System nach einem der Ansprüche 5 bis 6, wobei es sich bei dem Seltenerdmetall um ein Lanthanid mit einer Ordnungszahl von 57 bis 71, vorzugsweise Neodym, handelt.

8. Katalytisches System nach einem der Ansprüche 5 bis 7, wobei die Brücke P der Formel ZR¹R² entspricht, wobei Z für ein Silicium- oder Kohlenstoffatom steht und R¹ und R² gleich oder verschieden sind und jeweils für eine Alkylgruppe mit 1 bis 20 Kohlenstoffatomen, vorzugsweise ein Methyl, stehen.

9. Katalytisches System nach Anspruch 8, wobei Z für Si steht.

10. Katalytisches System nach einem der Ansprüche 5 bis 9, wobei das Symbol Y für die Gruppe Met-G steht, wobei Met für ein Seltenerdmetallatom steht und G für eine Gruppe, die die Borhydrid-Einheit BH₄ umfasst, oder ein Halogenatom, das aus der Gruppe bestehend aus Chlor, Fluor, Brom und Iod ausgewählt ist, steht.

11. Katalytisches System nach Anspruch 10, wobei G für ein Chloratom oder die Gruppe der Formel (IV) steht:
(BH₄)_{(1+y)-}L_{y}-Nₓ **(IV)**
in der
L für ein Alkalimetall, das aus der Gruppe bestehend aus Lithium, Natrium und Kalium ausgewählt ist, steht,
N für ein Molekül eines Ethers, vorzugsweise Diethylether oder Tetrahydrofuran, steht,
x ganzzahlig oder nicht ganzzahlig ist und gleich oder größer als 0 ist,
y ganzzahlig ist und gleich oder größer als 0 ist.

12. Verfahren zur Herstellung eines Polymers, das die Polymerisation eines zweiten Monomers in Gegenwart eines in einem der Ansprüche 5 bis 11 definierten katalytischen Systems umfasst, wobei es sich bei dem zweiten Monomer um Ethylen oder eine Mischung von Ethylen und einem Comonomer handelt, wobei es sich bei dem Comonomer um ein 1,3-Dien, ein α-Monoolefin oder eine Mischung davon handelt.

13. Verfahren zur Herstellung eines Polymers nach Anspruch 12, wobei es sich bei dem Comonomer um 1,3-Butadien, Isopren oder eine Mischung von zwei oder der drei Comonomeren, bei denen es sich um 1,3-Butadien, Isopren und Styrol handelt, handelt.

14. Verfahren zur Herstellung eines Polymers nach einem der Ansprüche 12 bis 13, bei dem auf die Polymerisation des zweiten Monomers eine Reaktion mit einer protischen Verbindung oder mit einem Funktionalisierungsmittel folgt.

## Claims

1. Diorganomagnesium compound of formula (I)
R^{B}-Mg-R^{A} (I)
R^{A} being different from R^{B},
R^{A} being a polymer chain of a first monomer chosen from the group of monomers consisting of 1,3-dienes, aromatic α-monoolefins and mixtures thereof, the polymer chain having a first end bonded to the magnesium atom and a second end bearing an amine function,
R^{B} comprising a benzene nucleus substituted with a magnesium atom, one of the carbon atoms of the benzene nucleus ortho to the magnesium being substituted with a methyl, an ethyl, an isopropyl or forming a ring with the carbon atom which is its closest neighbour and which is meta to the magnesium, the other carbon atom of the benzene nucleus ortho to the magnesium being substituted with a methyl, an ethyl or an isopropyl, on condition that if one of the 2 ortho carbon atoms is substituted with an isopropyl, the second ortho carbon atom is not substituted with an isopropyl.

2. Diorganomagnesium compound according to Claim 1, in which the diorganomagnesium compound is of formula (II) 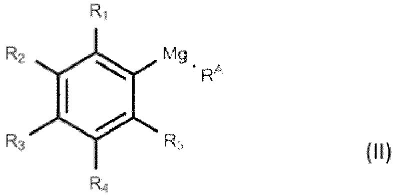
R₁ and R₅, which may be identical or different, represent a methyl or an ethyl, preferably a methyl,
R₂, R₃ and R₄, which may be identical or different, being a hydrogen atom or an alkyl,
R^{A} being defined according to Claim 1.

3. Diorganomagnesium compound according to either one of Claims 1 to 2, in which R^{A} is a 1,3-butadiene, isoprene or styrene homopolymer chain or a copolymer chain of monomers chosen from 1,3-butadiene, isoprene and styrene.

4. Diorganomagnesium compound according to any one of Claims 1 to 3, in which the amine function is a tertiary amine.

5. Catalytic system based at least:
- on a metallocene of formula (IIIa) or (IIIb),
- on a diorganomagnesium compound as cocatalyst,
{P(Cp¹)(Cp²)Y} **(IIIa)**
Cp³Cp⁴Y **(IIIb)**
Y denoting a group including a rare-earth metal atom,
Cp¹, Cp², Cp³ and Cp⁴, which may be identical or different, being chosen from the group consisting of fluorenyl groups, cyclopentadienyl groups and indenyl groups, the groups being substituted or unsubstituted,
P being a group bridging the two groups Cp¹ and Cp² and comprising a silicon or carbon atom,
the diorganomagnesium compound being a diorganomagnesium compound defined in any one of Claims 1 to 4.

6. Catalytic system according to Claim 5, in which Cp¹ and Cp² are identical and are chosen from the group consisting of substituted fluorenyl groups and the unsubstituted fluorenyl group of formula C₁₃H₈.

7. Catalytic system according to either one of Claims 5 to 6, in which the rare-earth metal is a lanthanide the atomic number of which ranges from 57 to 71, preferably neodymium.

8. Catalytic system according to any one of Claims 5 to 7, in which the bridge P corresponds to the formula ZR¹R², Z representing a silicon or carbon atom and R¹ and R², which may be identical or different, each representing an alkyl group comprising from 1 to 20 carbon atoms, preferably a methyl.

9. Catalytic system according to Claim 8, in which Z is Si.

10. Catalytic system according to any one of Claims 5 to 9, in which the symbol Y represents the group Met-G, with Met denoting the rare-earth metal atom and G denoting a group comprising the borohydride BH₄ unit or denoting a halogen atom chosen from the group consisting of chlorine, fluorine, bromine and iodine.

11. Catalytic system according to Claim 10, in which G denotes a chlorine atom or the group of formula (IV)
(BH₄)_{(1+y)-}L_{y}-Nₓ **(IV)**
in which
L represents an alkali metal chosen from the group consisting of lithium, sodium and potassium,
N represents a molecule of an ether, preferably diethyl ether or tetrahydrofuran,
x, which may or may not be an integer, is greater than or equal to 0,
y, which is an integer, is greater than or equal to 0.

12. Process for preparing a polymer, which comprises polymerizing a second monomer in the presence of a catalytic system defined in any one of Claims 5 to 11, the second monomer being ethylene or a mixture of ethylene and a comonomer, the comonomer being a 1,3-diene, an α-monoolefin or a mixture thereof.

13. Process for preparing a polymer according to Claim 12, in which the comonomer is 1,3-butadiene, isoprene or a mixture of two or three comonomers 1,3-butadiene, isoprene and styrene.

14. Process for preparing a polymer according to either one of Claims 12 to 13, in which the polymerization of the second monomer is followed by a reaction with a protic compound or with a functionalizing agent.
